# EUROPÄISCHE PATENTANMELDUNG

(11) **EP 0 911 784 A1**
(43) Veröffentlichungstag der Anmeldung: **28.04.1999**
(21) Anmeldenummer: 98119658.7
(22) Anmeldetag: 17.10.1998
(51) Int. Cl.: G09B 21/00

(54) **Vorrichtung zur Darstellung taktiler Informationen**

(30) Priorität: 22.10.1997 DE 19746617
(71) Anmelder: Matschulat, Gunnar, 42119 Wuppertal (DE)
(72) Erfinder: Matschulat, Gunnar, 42119 Wuppertal (DE)
(74) Vertreter: Mentzel, Norbert, Dipl.-Phys.

(57) **Zusammenfassung**

Die erfindungsgemäße Vorrichtung dient der Wiedergabe von Bild- und Schriftinformation in einer für blinde Menschen wahrnehmbaren taktilen Form. Dazu werden, mehrere Aktuatoren (12), die der Betätigung von taktilen Stiften (13) dienen, in einem planaren Trägerteil (11) angeordnet, wobei die Aktuatoren in einer Ebene liegen. Die Aktuatoren weisen zumindest zwei Leiterbahnen (45,47) auf, von denen jeweils wenigstens eine über einen elektrisch leitenden Profilstrang (25) kontaktiert, und mit einer Steuerelektronik (21) verbunden wird. Der elektrisch leitende Profilstreifen (25) kontaktiert dabei die jeweiligen Leiterbahnen aller in einem Trägerteil angeordneten Aktuatoren. Wenigstens ein Leiter (46) des Aktuators wird jedoch über einen separaten Einzelkontakt (19) mit der Steuerelektronik verbunden. Die in einem Trägerteil angeordneten Aktuatoren betätigen jeweils eine Reihe von taktilen Stiften. Zum Aufbau einer größeren, geschlossenen taktilen Bildwiedergabefläche werden die Trägerteile erfindungsgemäß von zwei Seiten her in einer Einschubaufnahme (26) angeordnet, wobei sich die Aktuatoren spiegelbildlich gegenüberliegen. In dieser Einschubaufnahme sind die einzelnen Trägerteile an jeder Seite der Einschubaufnahme kaskadenförmig angeordnet.

## Beschreibung

Die Erfindung richtet sich auf eine Vorrichtung der in den Oberbegriffen der Ansprüche 1, 2 und 3 genannten Art. Eine derartige Vorrichtung dient der Wiedergabe von Bild- und Schriftinformationen in einer für blinde Menschen wahrnehmbaren taktilen Form.

Bei einer Vorrichtung der vorgenannten Art ist es aus der US 47 58 165 bekannt, Biegewandler an einem Trägerteil anzuordnen. Die Biegewandler sind dabei in ihrem hinteren Bereich am Trägerteil festgelegt, während sie an ihrem entgegengesetzten Ende mit taktilen Stiften zusammenwirken, die mittels der Biegewandler angehoben und abgesenkt werden können. An ihrem hinteren Ende sind die Biegewandler über Lötstellen, und daran angeschlossenen Verdrahtungen mit einer Steuerelektronik verbunden, die im Betriebsfall das Auf- und Absenken der Biegewandler und somit der taktilen Stifte steuert.

Von Nachteil bei dieser bekannten Vorrichtung ist, daß sie nur eine sehr geringe Stoßresistenz aufweist. So kann es passieren, daß in dem Falle, daß ein mit dem Trägerteil bestücktes Gerät herunterfällt und hart aufschlägt, sich die nur angelöteten Kontakte von den Biegewandlern lösen, so daß es zu einer Funktionsstörung kommt und das Trägerteil ausgebaut und ausgetauscht werden muß. Ebenfalls können bei einem Sturz die Biegewandler sich innerhalb des Trägerteils verschieben, so daß sie unter Umständen den mechanischen Kontakt zu den taktilen Stiften verlieren und aufwendig neu justiert werden müssen.

Ein weiterer Nachteil dieser bekannten Vorrichtung ist, daß eine größere zusammenhängende Tastbildpunktfläche mittels dieser Trägerteile nicht erzeugt werden kann. Ebenfalls können nur Biegewandler bestimmter Länge in das bekannte Trägerteil eingebaut werden, da das Trägerteil nach vorne hin, also zu dem Ende der Biegewandler hin, die mit den taktilen Stiften zusammenwirken, abgeschlossen ist.

Aufgabe der vorliegenden Erfindung ist es, eine Vorrichtung der oben genannten Art zu entwickeln, die die genannten Nachteile vermeidet, eine lange Lebensdauer aufweist, preiswert herzustellen ist und die eine kompakte Bauweise taktiler Bildwiedergabegeräte ermöglicht.

Erfindungsgemäß wird dies durch die im kennzeichnenden Teil der Ansprüche 1 bis 3 genannten Maßnahmen erreicht, denen folgende besondere Bedeutung zukommt.

Die Aktuatoren weisen in ihre Mehrheit mehrere Kontaktstellen auf, von denen jede eine unterschiedliche Wertigkeit/Funktion besitzt. Dabei können bestimmte Kontaktstellen, die eine gleiche Wertigkeit aufweisen zum Zwecke der Ansteuerung zusammengefaßt werden. Gemäß Anspruch 1 können diese Kontaktstellen gleicher Wertigkeit mittels eines elektrisch leitenden, elastischen Streifens kontaktiert werden, der an die Kontaktstelle der Aktuatoren angepreßt ist. Diese Art der Kontaktierung hat den besonderen Vorteil, dass in dem Falle, dass ein Stoß auf die erfindungsgemäße Vorrichtung einwirkt, der elektrische Kontakt an der Kontaktstelle nicht verloren geht, da der elastische Streifen diesen Stoß oder Schlag zu absorbieren vermag. Der elastische Streifen wird günstigerweise gemäß Anspruch 16 in einem, im Trägerteil vorgesehenen Ausnehmung oder einer Nut, welche ungefähr dieselbe Länge und Form wie der elastische Streifen aufweisen, eingebettet um ein Verrutschen des elastischen Streifens auch bei größerer Stoßeinwirkung zu verhindern. Der Anpreßdruck des elastischen Streifens kann dadurch erzeugt werden, dass gemäß Anspruch 22 die Aktuatoren im Bereich der Kontaktstellen an das Trägerteil unter Druck angeklebt werden. Dadurch wird auch gleichzeitig der elastische Streifen an die Kontaktstellen angepreßt. Ebenfalls kann auch, insofern das Trägerteil zweiteilig ist, es nämlich gemäß Anspruch 10 aus einem Kopfteil und einem Basisteil besteht, die Teile des Trägerteils zu beiden Seiten der Aktuatoren unter Druck an diese angeklebt werden. Durch das Ankleben der Aktuatoren an das Trägerteil wird es gleichzeitig erreicht, dass die einzelnen Aktuatoren nicht mehr aus ihrer Festhaltung im Trägerteil herausspringen können, so dass der Kontakt mit den taktilen Stiften oder Tastpunkten auch nach einer Stoß- oder Schlageinwirkung gegeben ist. Die Aktuatoren werden also bei der Montage einmalig für die gesamte Lebenszeit der Vorrichtung am Trägerteil justiert. Ein Großteil der herkömmlichen Module bedarf, z.B. nach leichten Stürzen der neuerlichen Justage. Die Justage ist notwendig, damit die wichtigen Isolationsabstände dauerhaft exakt eingehalten werden. Beim Unterschreiten dieser Abstände kommt es zu Stromüberschlägen, da mit ca. 200 Volt gearbeitet wird.

Von Vorteil gemäß Anspruch 17 ist es, wenn alle auf der Ober- und/oder Unterseite der Aktuatoren angeordneten Leiter jeweils über nur einen elastischen Streifen elektrisch kontaktiert sind. Daraus ergibt sich der Vorteil, dass die Montage und Produktion der erfindungsgemäßen Vorrichtung erheblich vereinfacht wird und ebenfalls Kosten eingespart werden, da ein aufwendiges Kontaktieren jedes einzelnen Aktuators für sich an all seinen Kontaktstellen nicht mehr notwendig ist.

Günstig gemäß Anspruch 23 ist es, wenn der elastische Streifen ein elektrisch leitender Elastomerstreifen ist. Solche Elastomerstreifen bieten besonders günstige Eigenschaften im Hinblick auf die Stoßunempfindlichkeit der Kontaktierung, da aufgrund der eigenen Elastizität auch bei härtesten Schlägen keine Veränderung der Kontakteigenschaft auftritt, insbesondere ist ein Festlegen der Aktuatoren zwischen den Trägerteilen unter Anpreßdruck, bei Verwendung eines Elastomerstreifens nicht unbedingt notwendig (je nach Materialeigenschaften des Elastomers). So reicht es, wenn die Teile nur noch aneinandergeklebt oder geschweißt werden.

Ebenfalls günstig kann es sein gemäß Anspruch 25, wenn die elastischen Streifen aus einem elektrisch leitenden Metall gefertigt sind, wie z.B. aus Kupfer, Silber, Gold o.ä.. Auch diese Metalle besitzen bis zu einem gewissen Grade eine Elastizität, so dass sich auch hier eine sichere und stoßresistente Kontaktnahme durch ein Anpressen an die Kontaktstellen ergibt.

Gemäß Anspruch 24 kann es günstig sein, wenn wenigstens ein, am Aktuator befindlicher Leiter mit einer separaten elektrischen Zuleitung zur Steuereinheit verbunden ist, über die dann Steuersignale, die nur für diesen einzelnen Aktuator vorgesehen sind, übertragen werden können.

In einer weiteren erfinderischen Ausgestaltung der Vorrichtung, sind die Trägerteile in einem Rahmenteil angeordnet. In diesem Rahmenteil werden die Trägerteile in ihrer Position justiert und fixiert. Durch die zusätzliche Verwendung dieses Rahmenteils wird es ermöglicht, größere taktile Bildflächen in einfachster Weise aufzubauen. Die Trägerteile können dabei entweder nebeneinanderliegend angeordnet werden (also vertikal) oder aber kaskadenartig übereinanderliegend angeordnet werden (horizontal). Die genaue Positionierung wird dabei dadurch erreicht, dass Mittel im Rahmenteil angeordnet sind, die eine exakte Justierung der Trägerteile ermöglichen.

Gemäß Anspruch 5 kann es günstig sein, wenn im Rahmenteil die Trägerteile derart angeordnet sind, dass sich jeweils ein Trägerteil spiegelbildlich einem anderen Trägerteil gegenübersteht. Diese Bauweise hat den großen Vorteil, dass sie eine relativ niedrige Bauhöhe bei taktilen Bildschirmen mit großer Anzahl von Tastpunkten ermöglicht. Die Bauhöhe der Vorrichtung wird ungefähr um die Hälfte durch die spiegelbildliche Anordnung halbiert.

Gemäß Anspruch 11 kann es günstig sein, wenn das Trägerteil an seinen Außenseiten Mittel besitzt, die mit rahmenteilseitigen Mitteln zusammenwirken, die der genauen Justierung der Trägerteile im Rahmenteil dienen.

Bei einer weiteren erfinderischen Gestaltung der Vorrichtung ist das Trägerteil als flaches Bauteil ausgebildet, in dem zumindest zwei Aktuatoren angeordnet sind. Die Aktuatoren liegen dabei parallel zu der Ebene die durch das flache Trägerteil aufgespannt wird. Durch diese flache Bauweise kann die Bauhöhe der erfindungsgemäßen Vorrichtung wiederum stark reduziert werden, da sich die planaren Trägerteile in nur geringem Abstand übereinander plazieren lassen. Die planaren Trägerteile können dabei ein- oder mehrteilig ausgebildet sein.

Günstig gemäß Anspruch 10 kann es jedoch sein, wenn das Trägerteil zweiteilig ist und aus einem oberen Teil und einem unteren Teil besteht, zwischen denen die Aktuatoren eingefaßt sind. In einem solchen planaren Trägerteil lassen sich in einfacher Weise auch mehr als zwei Aktuatoren nebeneinander in einer Ebene anordnen. So können z.B. in einfacher Weise zehn, zwölf, sechzehn oder mehr Aktuatoren nebeneinander angeordnet sein. Durch diese Anordnung von mehreren Aktuatoren nebeneinander ergibt sich im Vergleich zu den bekannten Konstruktionen eine große Platzersparnis und die Möglichkeit taktile Bildflächen oder Grafikdisplays zu bauen bei denen jeder Tastpunkt einen gleichmäßigen engen Abstand zueinander hat. Die Aktuatoren können bei dieser Bauweise ebenfalls noch eine größere Breite besitzen als diejenigen die bei den bekannten Vorrichtungen eingesetzt werden. Eine größere Breite des Aktuators bedeutet gleichzeitig bei gleicher Länge und Dicke des Aktuators eine höhere Kraft des Biegers und auch im Umkehrschluß eine niedrige Voltzahl die für den Betrieb des Aktuators benötigt wird.

Gemäß Anspruch 21 kann es von Vorteil sein, wenn das obere Teil des Trägerteils relativ größer ausgebildet ist, als das untere Teil des Trägerteils. Diese Ausgestaltung ist von daher vorteilhaft, wenn die Außenkante des oberen Teils als justierendes Mittel (Vorsprung) dient, der mit dem justierenden Mittel des Rahmenteils zusammenwirkt. Ein relativ langer Vorsprung erlaubt nämlich eine exakte Justierung. Ein flächenmäßig relativ großes oberes Teil des Trägerteils weist weiterhin in sinnvoller Weise eine Ausnehmung auf, die den Aktuatoren genügend Spielraum für eine Bewegung in Richtung des oberen Teiles beläßt, und die eine Aufwärtsbewegung der Aktuatoren nicht vorzeitig beendet.

Weitere Maßnahmen und Vorteile der Erfindung ergeben sich aus den Unteransprüchen, der nachfolgenden Beschreibung und den Zeichnungen. In den Zeichnungen sind die Erfindungen in zwei Ausführungsbeispielen dargestellt. Es zeigen:
- Fig. 1: schematisch, ein erstes Ausführungsbeispiels eines Trägerteils mit daran angeordneten Bauteilen in Ansicht von oben,
- Fig. 2: schematisch, einen Querschnitt entlang des Profiles II - II aus Fig. 1,
- Fig. 3: schematisch, eine Zusammenstellung der am Trägerteil angeordneten Bauteile im Querschnitt entlang des Profiles III - III aus Fig. 1,
- Fig. 3a: schematisch, ein Schnitt durch die Kontaktfahne entlang des Profiles IIIa - IIIa aus Fig. 1,
- Fig. 3b: schematisch, ein Schnitt durch die Kontaktfahne entlang des Profiles IIIb - IIIb aus Fig. 1,
- Fig. 4: schematisch, ein zweites Ausführungsbeispiel eines erfindungsgemäßen Trägerteils mit angeordneten Bauteilen in Ansicht von oben,
- Fig. 5: schematisch, eine Einschubaufnahme mit darin angeordneten Trägerteilen, und einem darüberliegenden Tastfeld, in Ansicht von oben,
- Fig. 6: schematisch, eine Einschubaufnahme im Querschnitt,
- Fig. 7: schematisch, eine Einschubaufnahme im Querschnitt entlang des Profiles VII - VII aus Fig. 5,
- Fig. 8: ein vergrößerter Schnitt durch das Tastfeld und darunter angeordneten Trägerteilen.

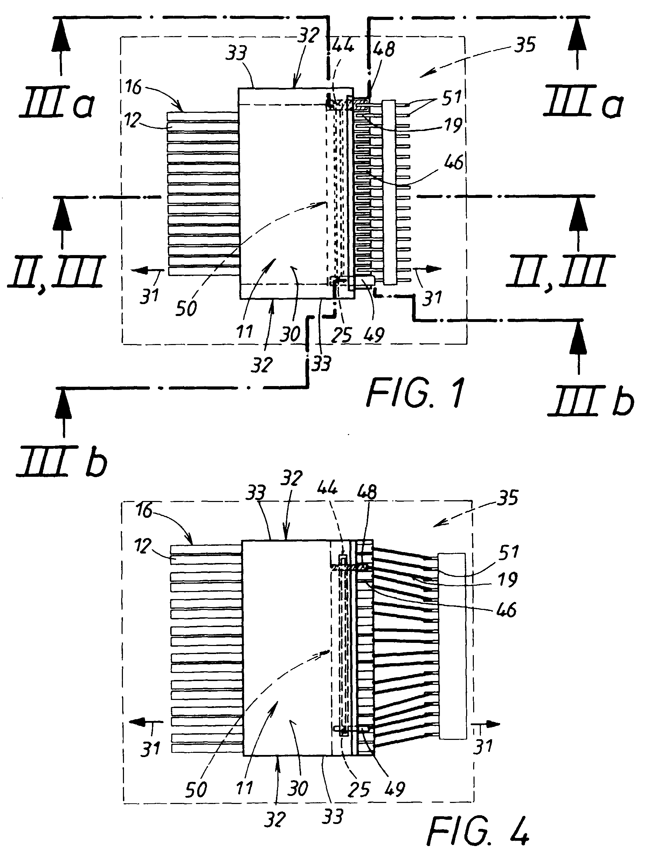

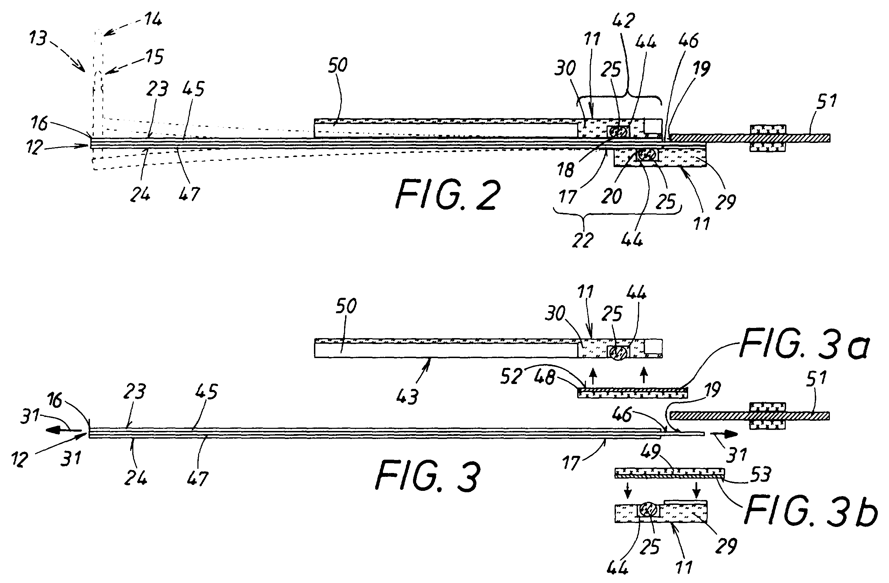

Die erfindungsgemäße Vorrichtung umfaßt zunächst Module mit an Trägerteilen 11 angeordneten Aktuatoren 12, wie sie in den Fig. 1 bis 4 im Detail dargestellt sind. In den Fig. 1 bis 3 ist eine erste Ausführungsform eines derartigen Moduls dargestellt. Das Trägerteil 11 ist in diesem Ausführungsbeispiel planar ausgebildet und besteht aus einem Basisteil 29 und einem Kopfteil 30. Zwischen dem Kopfteil 30 und dem Basisteil 29 des Trägerteils 11 sind die Aktuatoren 12 angeordnet. Die Aktuatoren 12 sind dabei an einem Ende 17 zwischen dem Kopf- und Basisteil 30, 29 des Trägerteils 11 fixiert, was durch Einkleben, Einschweißen oder auf eine andere Weise erfolgen kann.

Die Aktuatoren 12 sind dabei in einer Ebene angeordnet die parallel der Ebene 35 des Trägerteils 11 liegt.

In einem Bereich 22 ist im Kopfteil 30 und im Basisteil 29 jeweils eine zum Aktuator 12 hin geöffnete Ausnehmung 44 vorgesehen. In dieser Ausnehmung 44 befindet sich ein elektrisch leitender elastischer Profilstrang 25. Diese im Kopf- und im Basisteil 30, 29 angeordneten elastischen Profilstränge 25 kontaktieren im montierten Zustand einen oberen und einen unteren Leiter 45, 47, die jeweils auf der Unter/Oberseite 24, 23 des Aktuators 12 angeordnet sind. Der elastische Profilstrang 25 kontaktiert dabei jeweils einen Leiter 45, 47 an sämtlichen an einem Trägerteil 11 angeordnete Aktuatoren 12. Die Kontaktierung des im Kopfteil 30 angeordneten elastischen Profilstranges 25 erfolgt über eine Leiterbahn 52/Kontaktfahne 48 mittels derer der elastische Profilstrang 25 mit einer Steuerelektronik 21 über den Kontakt 51 verbunden ist. Der elastische Profilstrang 25 im Basisteil 29 ist über eine Leiterbahn 53/Kontaktfahne 49 und einem Kontakt 51 mit der Steuerelektronik 21 in elektrische Verbindung gesetzt.

Die elektrische Verbindung zwischen dem, im Kopfteil 30 angeordneten elektrischen Profilstrang 25 und dem oberen Leiter 45 des Aktuators 12 erfolgt an der Kontaktstelle 18; die elektrische Verbindung zwischen dem im Basisteil 29 angeordneten Profilstrang 25 mit dem unteren Leiter 47 des Aktuators 12 erfolgt an der Kontaktstelle 20.

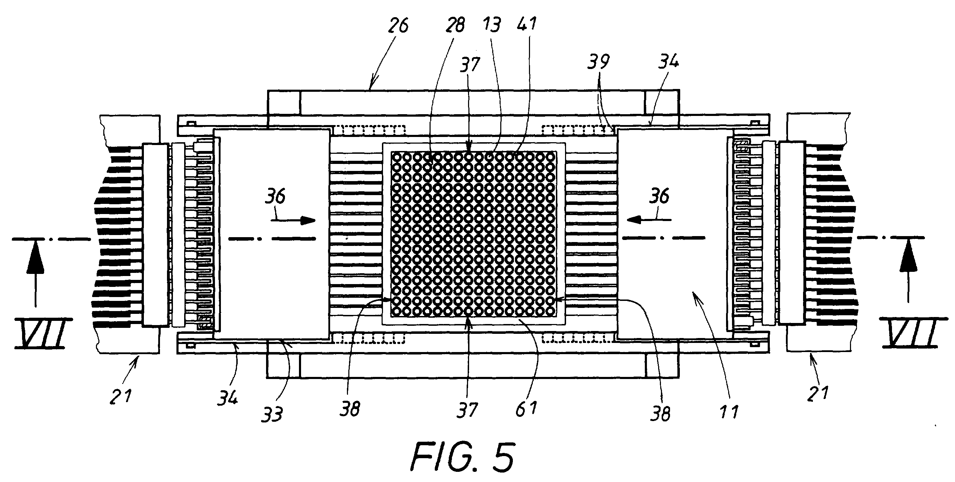

Bei den Ausführungsbeispielen gemäß Fig. 1 und 4 verfügen die Aktuatoren 12 jeweils noch über einen mittleren Leiter 46. Dieser mittlere Leiter 46 wird jeder für sich jeweils separat an den Kontaktstellen 19 über die Einzelkontakte 51 mit der Steuerelektronik 21 verbunden.

Bei anderen als den in diesem Ausführungsbeispiel dargestellten Aktuatoren 12 (Piezo-Biegewandler) kann es sein, daß der Aktuator nur zwei Leiter aufweist. In diesem Fall kann es sein, daß auch die oberen oder die unteren Leiter 45, 47 der Aktuatoren 12 eines Trägerteils 11 einzeln kontaktiert sind.

Im Betriebsfall erhalten die Aktuatoren 12 über die Steuerelektronik 21 elektronische Impulse über die die Aktuatoren 12 angehoben oder abgesenkt werden. Durch diese Bewegung werden Tastpunkte 13 oder auch taktile Stifte o.ä., die mit dem freien Ende 16 des Aktuators 12 in mechanischem Kontakt stehen, in eine Arbeitslage 14 oder eine Ruhelage 15 überführt. Insbesondere um das Anheben der Tastpunkte 13 durch die Aktuatoren 12 zu ermöglichen, ist im Kopfteil 30 des Trägerteiles 11 ein Freiraum 50 vorgesehen, der ein Nachobenschwingen des Aktuators 12 erlaubt. Dieser Freiraum 50 kann natürlich auch entfallen, in dem Fall, daß das Kopfteil 30 die Aktuatoren nur an ihren fixierten Enden 17 überdeckt, da in diesem Fall ein freies Schwingen der Aktuatoren 12 nicht durch das Kopfteil behindert würde.

Das erfindungsgemäße Trägerteil 11 gemäß den Fig. 1 bis 3 ist insbesondere bei der Verwendung der erfindungsgemäßen Vorrichtung im Aufbau eines großflächigen taktilen Bildes geeignet.

An seinen Außenseiten 32 verfügt das Trägerteil 11 über Vorsprünge 33 die der besseren Positionierung und Justierung des Trägerteils 11 bzw. der Module in einer Einschubaufnahme 26 der erfindungsgemäßen Vorrichtung dienen.

Das in Fig. 4 dargestellte Modul ist dem in Fig. 1 bis 2 dargestellten Modul im Wesentlichen ähnlich. Jedoch sind die Aktuatoren zwischen dem Kopfteil 30 und dem Basisteil 29 jeweils immer in Zweierpaaren angeordnet, so daß sich zwischen jeweils zwei Aktuatoren ein etwas größerer Freiraum befindet. Weiterhin ist der Freiraum 50 im Kopfteil 30 des Trägerteils 11 zu den Außenseiten 32 des Trägerteils 11 hin offen, während er in der Ausführungsform gemäß Fig. 1 zu den Außenseiten 32 des Trägerteils 11 hin begrenzt ist. Ein Modul wie es in Fig. 4 dargestellt ist, ist hervorragend zum Aufbau von Braillezeilen geeignet. Dazu müssen lediglich vier solche Module versetzt untereinander angeordnet werden, so daß sich aufgrund der paarigen Anordnung der Aktuatoren jeweils Braillebuchstabenfelder mit acht Punkten ergeben. Es können ferner noch mehrere solche Vierersets von Modulen aus Fig. 4 nebeneinander angeordnet werden um längere Braillezeilen zu erzeugen.

Als Material für die Trägerteile 11 ist in diesem Ausführungsbeispiel Kunststoff vorgesehen. Es ist jedoch auch denkbar, andere Materialen wie z.B. Faserverbundwerkstoffe, bestimmte Metalle, oder gar Glas einzusetzen. Die Aktuatoren 12 sind in diesem Ausführungsbeispiel als Piezo-Biegewandler vorgesehen, die dreipolig sind und die sich mittels der Steuerelektronik 21 nach oben und unten bewegen lassen. Merkmal der Erfindung ist es jedoch auch, andere Arten von Aktuatoren 12 wie z.B. nur zweipolige Piezo-Biegewandler oder elektromagnetische Biegewandler u.ä. einzusetzen. Standardmäßig werden die genannten Biegewandler in den Dicken 0,6 mm und 0,8 mm angebracht. In die erfindungsgemäßen Trägerteile 11 können jedoch auch sämtliche andere Dicken von Aktuatoren 12 eingebaut werden. Ebenso können in die erfindungsgemäßen Trägerteile 11 Aktuatoren 12 verschiedenster Längen und Breiten ohne technische Probleme aufgenommen werden. Dies ist bei manchen der bekannten Trägerteile 11 nicht ohne weiteres möglich.

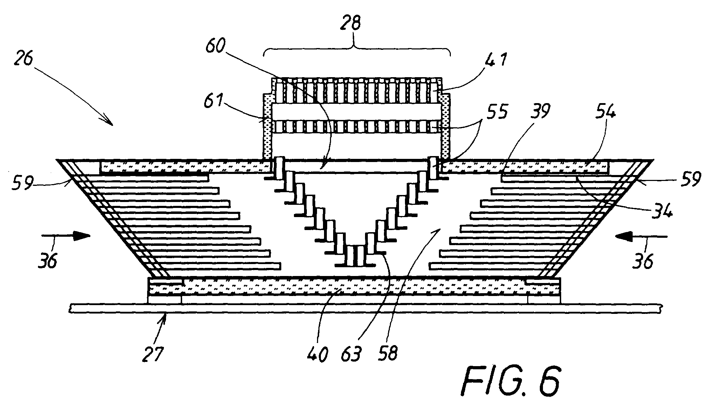

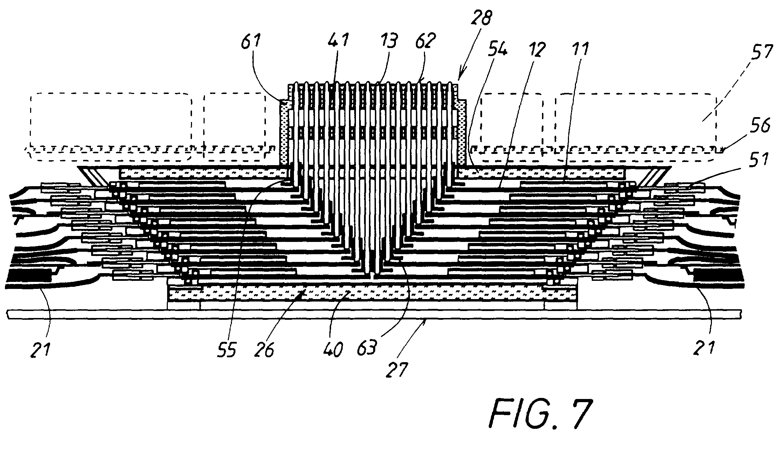

In den nachfolgenden Figuren 5 bis 8 ist nunmehr ein weiterer Gegenstand der Erfindung dargestellt. In Fig. 5 ist die bereits vorerwähnte Einschubaufnahme 26 dargestellt, in die die Module/Trägerteile 11 eingesetzt sind. In der vorliegenden Ausführungsform der Einschubaufnahme 26 sind die Trägerteile 11 in einer spiegelbildlichen Symmetrie in dieser angeordnet. Der innere Aufbau der Einschubaufnahme 26 ist in den Fig. 6 und 7, in denen die Einschubaufnahme 26 im Querschnitt dargestellt ist, noch einmal verdeutlicht. In der vorliegenden Ausführungsform ist die Einschubaufnahme 26 als Kunststoffteil ausgeführt. Die Einschubaufnahme 26 könnte jedoch auch aus anderen Materialien gefertigt sein, wie z.B. aus Metall, Glas, Keramik etc..

Bei der Einschubaufnahme 26 sind zwei Seitenteile 58 senkrecht auf einer Basis 40 angeordnet, wobei sich die Seitenteile 58 an den Außenkanten der Basis 40 befinden und parallel zur Längserstreckung der Einschubaufnahme 26 verlaufen. In den Seitenteilen 58 sind Führungsnuten 34 vorgesehen, die zur Abschlußkante 59 der Seitenteile 58 hin offen sind und zur Mitte der Seitenteile 58 hin durch einen Anschlag 39 begrenzt sind. Der Basis 40 gegenüberliegend ist die Einschubaufnahme 26 durch eine Kopfplatte 54 abgedeckt, wobei die Kopfplatte 54 einen zentral angeordneten Durchbruch 60 aufweist. Bei der vorliegenden Ausführungsform der Einschubaufnahme 26 befindet sich auf der Kopfplatte 54 ein, den Durchbruch 60 überlagerndes Aufbauteil 61, in dessen Kopfbereich sich ein Tastfeld 28 befindet. Die Höhe dieses Aufbauteils 61 ist u.a. abhängig von der Art und Länge der Tastpunkte 1 3/taktilen Stifte, sowie von der Art der installierten Aktuatoren 12. So könnte das Aufbauteil 61 auch vollständig in den Durchbruch 60 verlagert werden, so daß im Durchbruch 60 nur noch das Tastfeld 28 vorhanden wäre. In dem Aufbauteil 61 sind im Bereich des Tastfeldes 28 Durchbrüche 41 vorgesehen, durch die die Enden 62 der Tastpunkte 13 in das Tastfeld 28 ragen können.

Innerhalb des Aufbauteils 61 sowie in der Einschubaufnahme 26 sind weiterhin noch Führungen 55 vorgesehen, in denen die Tastpunkte/taktilen Stifte 13 geführt werden. Diese Führungen 55 sind in dem gegebenen Ausführungsbeispiel kreiszylindrisch, sie können jedoch ebenfalls auch andere Formen aufweisen, wie z.B. einen dreickigen, viereckigen oder mehreckigen Umriß, wenn die Tastpunkte 13 eine entsprechende äußere Form aufweisen. Die Führungen 55 weisen im Bereich der Einschubaufnahme 26 jeweils noch eine im rechten Winkel zur Führung 55 angeordnete Lippe 63 auf, die die jeweils darüberliegende Führung 55 nach unten hin abschließt.

Die Führungsnuten 34 sind in dem vorliegenden Ausführungsbeispiel parallel zur Basis 40 angeordnet. Im montierten Zustand sind in diese Führungsnuten 39 die Trägerteile 11 in Richtung der Pfeile 36 bis zum Anschlag 39 eingeschoben. Die Trägerteile 11 mit den Aktuatoren 12 sind aufgrund der kaskadenförmigen Anordnung der Führungsnuten 34 in der Einschubaufnahme 26 gegeneinander versetzt angeordnet. Das am weitesten untenliegende Trägerteil 11 ragt am weitesten in die Einschubaufnahme 26 hinein, während das ganz obenliegende Trägerteil 11 am weitesten von der Mitte der Einschubaufnahme 26 entfernt ist.

Die an den Trägerteilen 11 angeordneten Aktuatoren 12 untergreifen mit ihren freien Enden 16 die einschubaufnahmeseitigen Führungen 55, in denen sich die Tastpunkte 13 befinden, und werden nach oben und unten durch die an den Führungen 55 angeordneten Lippen gegen die darunter- und darüberliegenden Aktuatoren 12 abgeschirmt.

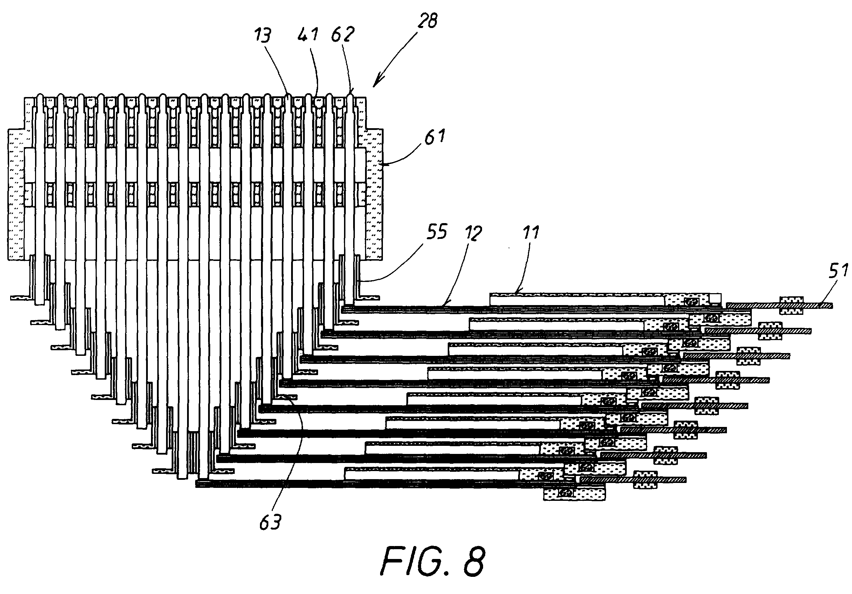

Die Anordnung der Trägerteile 11 mit den daran angeordneten Aktuatoren 12 innerhalb des Tastfeldes 28 ist in Fig. 8 noch einmal detailliert dargestellt.

In Fig. 7 ist die erfindungsgemäße Vorrichtung dargestellt, wie sie innerhalb eines Gehäuses 27 eingebaut sein kann. Die erfindungsgemäße Vorrichtung kann z.B. in eine Computertastatur eingebaut sein. Die Tasten 57 einer solchen Tastatur sind in Fig. 7 in ihrer Position angedeutet worden. Unterhalb der Tasten 57 befinden sich eine Platine 56 die, bei Betätigung der Tasten 57, die Signale an eine Recheneinheit weitergibt. Die Höhe des Aufbauteiles 61 ist, wie sich aus Fig. 7 ergibt, also ebenfalls abhängig von der Höhe, der Tastfeld 26 umgebenden Bauteile. Bei Verwendung flacher Sensortasten kann die Höhe des Aufbauteiles 61 auf ein Minimum reduziert sein, oder das Aufbauteil 61 ganz überflüssig werden.

Die Form des Tastfeldes 28, wie es in Fig. 5 wiedergegeben ist, ist ebenfalls variabel und in seiner Größe und der Anzahl der möglichen Tastpunkte nicht begrenzt.

Ist die Vorrichtung in Funktion gesetzt, so kann eine blinde Person mit ihrer Hand, insbesondere ihren Fingern auf dem Tastfeld 28 Bilder erfühlen, die durch die in eine Arbeitslage 14 oder in eine Ruhelage 15 versetzten Tastpunkte/taktilen Stifte 13 auf dem Tastfeld 28 wiedergegeben sind. Eventuell seitlich von dem Tastfeld 28 angebrachte Tasten 57 können der blinden Person dabei zur Steuerung des Bildwiedergabevorganges auf dem Tastfeld 28 oder anderer Einrichtungen des Bildwiedergabegerätes oder z.B. eines Computers dienen.

Es bleibt nun noch zu bemerken, daß die hier dargestellten Ausführungsformen nur beispielhafte Verwirklichungen der Erfindung sind. Die Erfindung ist jedoch nicht darauf beschränkt. Es versteht sich, daß die dargestellten Komponenten der Erfindung auch in anderen Materialen ausgeführt sein können, die über ähnliche Eigenschaften verfügen, wie diejenigen die hier beschrieben sind.

### Bezugszeichenliste:

- 11: Trägerteil/planares Trägerteil
- 12: Aktuator
- 13: Tastpunkt/taktiler Stift
- 14: Arbeitslage des Tastpunktes
- 15: Ruhelage des Tastpunktes
- 16: freies Ende (des Aktuators)
- 17: fixiertes Ende/zweites Ende (des Aktuators)
- 18: Kontaktstelle (oberer Leiter)
- 19: Kontaktstelle (mittlerer Leiter)
- 20: Kontaktstelle (unterer Leiter)
- 21: Steuerelektronik
- 22: Bereich (am fixierten Ende des Aktuators)
- 23: Oberseite des Aktuators
- 24: Unterseite des Aktuators
- 25: elastischer Profilstrang
- 26: Einschubaufnahme
- 27: Außengehäuse
- 28: Tastfeld
- 29: Basisteil (des Trägerteils)
- 30: Kopfteil (des Trägerteils)
- 31: Längserstreckung (des Aktuators)
- 32: Außenseiten (des Trägerteils)
- 33: Vorsprünge (am Trägerteil)
- 34: Führungsnuten (in der Einschubaufnahme)
- 35: Ebene (des Trägerteils)
- 36: Einschubrichtung (der Trägerteile in die Einschubaufnahme)
- 37: Reihe (von Tastpunkten quer zur Einschubrichtung)
- 38: Reihe von Tastpunkten in Einschubrichtung)
- 39: Anschlag
- 40: Basis (der Einschubaufnahme)
- 41: Durchbrüche im Tastfeld
- 42: hinterer Bereich (des Kopfteils)
- 43: Unterseite (des Kopfteils)
- 44: Ausnehmung
- 45: oberer Leiter
- 46: mittlerer Leiter 47 unterer Leiter
- 48: Kontaktfahne (oberer Leiter)
- 49: Kontaktfahne (unterer Leiter)
- 50: Freiraum (im Kopfteil)
- 51: Kontakte/Einzelkontakte
- 52: Leiterbahn (Kontaktfahne 48)
- 53: Leiterbahn (Kontaktfahne 49)
- 54: Kopfplatte (der Einschubaufnahme)
- 55: Führungen
- 56: Platine
- 57: Tasten
- 58: Seitenteile
- 59: Abschlußkante
- 60: Durchbruch (in der Kopfplatte)
- 61: Aufbauteil
- 62: Köpfe der Tastpunkte
- 63: Lippen

## Patentansprüche

1. Vorrichtung zur Darstellung taktiler Informationen, mit Trägerteilen (11) und mit wenigstens einem an jedem Trägerteil (11) angeordneten Aktuator (12), welcher im Betriebsfall einen Tastpunkt (13) in eine Arbeitslage (14) oder in eine Ruhelage (15) überführt, wobei das eine Ende (16) des Aktuators (12) mit dem Tastpunkt (13) zusammenwirkt,
und der Aktuator (12) an seinem anderen Ende (17) Kontaktstellen (18, 19, 20) besitzt, an denen er elektrisch leitend mit einer Steuerelektronik (21) verbunden ist,
und der Aktuator (12) an seinem einen Ende (16), welches mit dem Tastpunkt (13) zusammenwirkt, frei ist, und der Aktuator (12) im Bereich (22) seines zweiten Endes (17) in seiner Position fixiert ist,
**dadurch gekennzeichnet,**
daß wenigstens ein Teil der Kontaktstellen (18-20) des Aktuators (12) mittels elektrisch leitender elastischer Profilstränge (25) mit der Steuerelektronik (21) verbunden ist, wobei die elastischen Profilstränge (23) an die Kontaktstellen (18-20) angedrückt sind.

2. Vorrichtung zur Darstellung taktiler Informationen, mit Trägerteilen (11) und mit wenigstens einem an jedem Trägerteil (11) angeordneten Aktuator (12), welcher im Betriebsfall einen Tastpunkt (13) in eine Arbeitslage (14) oder in eine Ruhelage (15) überführt, wobei das eine Ende (16) des Aktuators (12) mit dem Tastpunkt (13) zusammenwirkt,
und der Aktuator (12) an seinem anderen Ende (16) Kontaktstellen (18-20) besitzt, an denen er elektrisch leitend mit einer Steuerelektronik (21) verbunden ist,
und der Aktuator (12) an seinem einen Ende (16), welches mit dem Tastpunkt (13) zusammenwirkt, frei ist, und der Aktuator (12) im Bereich (22) seines zweiten Endes (16) in seiner Position fixiert ist,
**dadurch gekennzeichnet,**
daß die Trägerteile (11) kaskadenförmig übereinander- und/oder nebeneinanderliegend in einer Einschubaufnahme (26) angeordnet sind.

3. Vorrichtung zur Darstellung taktiler Informationen, mit Trägerteilen (11) und mit wenigstens einem an jedem Trägerteil (11) angeordneten Aktuator (12), welcher im Betriebsfall einen Tastpunkt (13) in eine Arbeitslage (14) oder in eine Ruhelage (15) überführt, wobei das eine Ende (16) des Aktuators (12) mit dem Tastpunkt (13) zusammenwirkt,
und der Aktuator (12) an seinem anderen Ende (16) Kontaktstellen (18-20) besitzt, an denen er elektrisch leitend mit einer Steuerelektronik (21) verbunden ist,
und der Aktuator (12) an seinem einen Ende (16), welches mit dem Tastpunkt (13) zusammenwirkt, frei ist, und der Aktuator (12) im Bereich (22) seines zweiten Endes (16) in seiner Position fixiert ist,
**dadurch gekennzeichnet,**
daß wenigstens zwei Aktuatoren (12) an einem wenigstens einteilig ausgebildetem, planaren Trägerteil (11) angeordnet sind,
wobei die an dem planaren Trägerteil (11) angeordneten Aktuatoren (12) parallel zu einer Ebene (35) liegen.

4. Vorrichtung nach einem oder mehreren der Ansprüche 1 oder 3, dadurch gekennzeichnet, daß die Trägerteile (11) kaskadenartig übereinanderliegend und/oder nebeneinanderliegend in einer Einschubaufnahme (26) angeordnet sind.

5. Vorrichtung nach einem oder mehreren der Ansprüche 1 bis 4, dadurch gekennzeichnet, daß in der Einschubaufnahme (26) je ein Trägerteil (11) spiegelbildlich einem anderen Trägerteil (11) gegenüber angeordnet ist.

6. Vorrichtung nach einem oder mehreren der Ansprüche 1 bis 5, dadurch gekennzeichnet, daß wenigstens zwei Aktuatoren (12) an einem wenigstens einteilig ausgebildetem, planaren Trägerteil (11) angeordnet sind.

7. Vorrichtung nach einem oder mehreren der Ansprüche 1 bis 6, dadurch gekennzeichnet, daß der Aktuator (12) ein Piezo-Biegewandler ist.

8. Vorrichtung nach einem oder mehreren der Ansprüche 1 bis 7, dadurch gekennzeichnet, daß der Aktuator (12) ein elektromagnetischer Biegewandler ist.

9. Vorrichtung nach einem oder mehreren der Ansprüche 1 und 3 bis 8, dadurch gekennzeichnet, daß das Trägerteil (11) direkt in einem Außengehäuse (27), insbesondere einer Tastatur, angeordnet ist.

10. Vorrichtung nach einem oder mehreren der Ansprüche 1 bis 9, dadurch gekennzeichnet, daß das Trägerteil (11) zweiteilig ist und aus einem Basisteil (29) und einem Kopfteil (30) besteht.

11. Vorrichtung nach einem oder mehreren der Ansprüche 1 bis 10, dadurch gekennzeichnet, daß das Trägerteil (11) an beiden, parallel zur Längserstreckung (31) des Aktuators (12) verlaufenden Außenseiten (32) Vorsprünge (33) besitzt.

12. Vorrichtung nach einem oder mehreren der Ansprüche 1 bis 11, dadurch gekennzeichnet, daß das Trägerteil (11) in die Einschubaufnahme (26) eingeschoben ist, und daß die Vorsprünge (33) des Trägerteils (11) in Führungsnuten (34) der Einschubaufnahme (26) eingreifen, und das Trägerteil (11) dadurch ausgerichtet und justiert wird.

13. Vorrichtung nach einem oder mehreren der Ansprüche 1 bis 8 und 10 bis 12, dadurch gekennzeichnet, daß in der Einschubaufnahme (26) mehrere Trägerteile (11) übereinander angeordnet sind, wobei die Ebenen (35) der Trägerteile (11) im Wesentlichen parallel zur Basis (40) der Einschubaufnahme (26) liegen und dabei parallel zueinander ausgerichtet sind,
und daß das jeweils unter einem anderen Trägerteil (11) liegende Trägerteil (11) gegenüber dem darüberliegenden räumlich versetzt ist,
und jeweils die Aktuatoren (12) eines Trägerteils (11) mit einer quer zur Einschubrichtung (36) verlaufenden Reihe (37) von Tastpunkten (13) zusammenwirken.

14. Vorrichtung nach einem oder mehreren der Ansprüche 2, 4 bis 5, 7 bis 8 und 10 bis 13, dadurch gekennzeichnet, daß in der Einschubaufnahme (26) mehrere Trägerteile (11) nebeneinander angeordnet sind, wobei die Ebenen (35) der Trägerteile (11) im Wesentlichen vertikal zur Basis (40) der Einschubaufnahme (26) liegen und parallel zueinander ausgerichtet sind,
und daß der jeweils unter einem anderen Aktuator (12) liegende Aktuator (12) gegenüber dem darüberliegenden räumlich versetzt ist,
und die Aktuatoren (12) eines Trägerteils (11) jeweils mit, in Einschubrichtung (36) verlaufenden Reihe (37) von Tastpunkten (13) zusammenwirken.

15. Vorrichtung nach einem oder mehreren der Ansprüche 1 bis 14, dadurch gekennzeichnet, daß in dem Trägerteil (11) mehrere Aktuatoren (12) nebeneinander parallel zu der Ebene (35) angeordnet sind.

16. Vorrichtung nach einem oder mehreren der Ansprüche 1 bis 15, dadurch gekennzeichnet, daß die elastischen Profilstränge (25) in Ausnehmungen (44) im Trägerteil (11) eingebettet sind.

17. Vorrichtung nach einem oder mehreren der Ansprüche 1 bis 16, dadurch gekennzeichnet, daß auf den Ober- (23) und/oder Unterseiten (24) der Aktuatoren (12) Leiter (45, 47) angeordnet sind, und die Leiter (45, 47) auf der Ober- (23) bzw. Unterseite (24) des Aktuators (12) jeweils über einen durchgehenden elastischen Profilstrang (25) elektrisch kontaktiert, und mit der Steuerelektronik (21) verbunden sind.

18. Vorrichtung nach einem oder mehreren der Ansprüche 1 bis 17, dadurch gekennzeichnet, daß durch einen elastischen Profilstrang (25) jeweils alle auf der Oberseite (23) der Aktuatoren (12) liegenden Leiter (45) kontaktiert werden.

19. Vorrichtung nach einem oder mehreren der Ansprüche 1 bis 18, dadurch gekennzeichnet, daß durch einen elastischen Profilstrang jeweils alle auf der Unterseite (24) der Aktuatoren (12) liegenden Leiter (47) elektrisch kontaktiert werden.

20. Vorrichtung nach einem oder mehreren der Ansprüche 1 bis 19, dadurch gekennzeichnet, daß die Tastpunkte (13) in Durchbrüchen (41) in einem Tastfeld (28) liegen, welches oberhalb der Einschubaufnahme (25) angeordnet sind.

21. Vorrichtung nach einem oder mehreren der Ansprüche 1 bis 20, dadurch gekennzeichnet, daß das Kopfteil (30) flächenmäßig größer ist als das Basisteil (29) und nur in seinem hinteren Bereich (42) mit seiner Unterseite (43) unter Flächenberührung an den Aktuatoroberflächen (23) anliegt.

22. Vorrichtung nach einem oder mehreren der Ansprüche 1 bis 21, dadurch gekennzeichnet, daß die Aktuatoren (12) auf dem Kopf-(30) und/oder Basisteil (29) im Bereich (22) der Kontaktstellen (18-20) aufgeklebt sind.

23. Vorrichtung nach einem oder mehreren der Ansprüche 1 bis 22, dadurch gekennzeichnet, daß die elastischen Profilstränge (25) elektrisch leitende Elastomer-Streifen sind.

24. Vorrichtung nach einem oder mehreren der Ansprüche 1 bis 23, dadurch gekennzeichnet, dass ein zweiter und/oder dritter Leiter (46) des Aktuators (12), an der Kontaktstelle (19) mit der Steuerelektronik (21) elektrisch leitend verbunden ist, wobei der Anschluss unabhängig von denen der anderen an einem Trägerteil (11) angeordneten Aktuatoren (12) ist.

25. Vorrichtung nach einem oder mehreren der Ansprüche 1 bis 24, dadurch gekennzeichnet, daß die elastischen Profilstränge (25) aus elektrisch leitendem Metall gefertigt sind.
